(19) Europäisches Patentamt
European Patent Office
Office européen des brevets

(11) EP 0 907 320 B1

(12) **EUROPEAN PATENT SPECIFICATION**

(45) Date of publication and mention of the grant of the patent: **22.05.2002 Bulletin 2002/21**

(21) Application number: **97953594.5**

(22) Date of filing: **26.06.1997**

(51) Int Cl.7: **A01N 57/20**, A01N 57/22, C07F 9/32, C07F 9/40

(86) International application number: **PCT/GB97/01738**

(87) International publication number: **WO 98/00021 (08.01.1998 Gazette 1998/01)**

(54) **FUNGICIDAL COMPOSITIONS**

FUNGIZIDE ZUSAMMENSETZUNGEN

COMPOSITIONS FONGICIDES

(84) Designated Contracting States:
**AT BE DE DK ES FR GB GR IT NL PT**

(30) Priority: **28.06.1996 GB 9613637**

(43) Date of publication of application:
**14.04.1999 Bulletin 1999/15**

(73) Proprietor: **Aventis CropScience UK Limited**
**Hauxton, Cambridge CB2 5HU (GB)**

(72) Inventors:
- **KLEINER, Hans-Jerg**
  **61476 Kronberg (DE)**
- **MACH, Martin**
  **13507 Berlin (DE)**
- **HAGEMEISTER, Heinz**
  **40549 Düsseldorf (DE)**
- **REGNAT, Dieter**
  **65817 Eppstein (DE)**
- **BUSCHHAUS, Herbert**
  **13467 Berlin (DE)**
- **JENDE, Hans-Peter**
  **26188 Edewecht (DE)**
- **STOCK, David**
  **Essex CB10 1XL (GB)**
- **BRIGGS, Geoffrey Gower**
  **Essex CB10 1XL (GB)**

(74) Representative: **Waldman, Ralph David et al**
**Aventis CropScience GmbH**
**Patent- und Lizenzabteilung**
**Gebäude K801**
**65926 Frankfurt am Main (DE)**

(56) References cited:
**WO-A-93/04585**
**DE-A- 2 445 322**
**DE-A- 4 339 120**
**DE-C- 955 050**
**US-A- 2 570 503**

- **CHEMICAL ABSTRACTS, vol. 75, no. 7, 1971 Columbus, Ohio, US; abstract no. 49254, A.N. PUDOVIK ET AL.: "Reaction of phosphonites and phosphinites with tin tetrachlorides." XP002042608 & ZH. OBSHCH. KHIM., vol. 41, no. 4, 1971, pages 766-771,**
- **CHEMICAL ABSTRACTS, vol. 92, no. 20, 1980 Columbus, Ohio, US; abstract no. 166963, R.R.SHOUN ET AL.: "Bidentate organophosphorus compounds as extractants from acidic waste solutions." XP002042609 & CIM SPEC. VOL., vol. 21, no. 1, 1979, pages 101-107,**
- **Y. XU ET AL.: "Studies on N,N-disubstituted dialkyl 2-aminophosposhonates and derivatives thereof" SYNTHESIS., vol. 5, 1990, STUTTGART DE, pages 427-429, XP002042607**
- **CHEMICAL ABSTRACTS, vol. 62, no. 1, 1965 Columbus, Ohio, US; Y.Y. HSU ET AL: "Organophosphorus compounds. III. Dialkyl N,N-disubstituted aminomethylphosphonates and their derivatives." column 13176c; XP002042610 & HUA HSUEH HSUEH PAO, vol. 30, no. 6, 1964, pages 526-532,**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 907 320 B1

## Description

### Field of the invention

This invention relates to new fungicidal compositions.

### Prior Art

US Patent No 2927014 discloses phosphonates and phosphinates having herbicidal activity. In WO 9418837 and WO 9304585, it is disclosed that certain phosphonates can enhance the activity of specified herbicides. In DE-A-4339120 there are disclosed phosphonate acid esters as crystallisation inhibitors for certain azole fungicides. In particular, the crystallisation inhibitors prevent blockage of spray nozzles during application. We have found that certain phosphonates and phosphinates, which have little or no activity in their own right considerably enhance the fungicidal activity of fungicides and especially fluquinconazole and azoxystrobin.

### Description

According to a first aspect, the invention provides a fungicidal composition which comprises a mixture of

(a) fluquinconazole or azoxystrobin, and
(b) at least one phosphonate or phosphinate of formula I

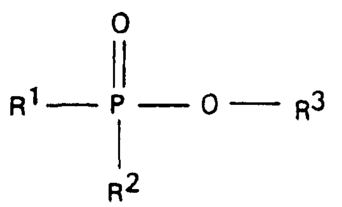

(I)

where

$R^1$ is $C_{6-20}$-alkyl, $C_{6-20}$-alkoxy or optionally substituted phenyl

$R^2$ is benzyl, $C_{6-20}$-alkyl, optionally interrupted by NH or O, di-$C_{6-20}$-alkylamino or the group

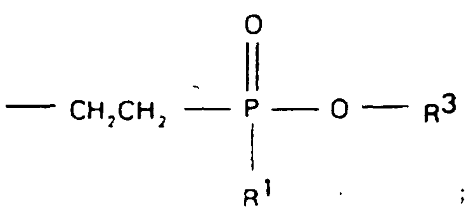

;

and

$R^3$ is $C_{6-20}$-alkyl.

According to a second aspect, the invention provides the use for enhancing the activity of a fungicide used to combat phytopathogenic fungi, of compounds of formula I as defined above.

Phosphonates of formula I wherein $R^1$ is $C_6$-$C_{20}$-alkoxy and $R^2$ is $C_6$-$C_{20}$-alkyl are known. They are made for example according the disclosure in DE 1,963,014.

Phosphinates of formula I wherein $R^1$ is $C_6$-$C_{20}$-alkyl and $R^2$ is phenyl can be prepared by catalytically induced addition of olefins to phenyl monoalkylphosphonites which are preferably prepared as described in DE patent 196 041 95.

Ethane-1,2-diphosphonic acid tetraalkyl esters of formula I wherein $R^1$ is $C_6$-$C_{20}$-alkoxy and $R^2$ is the group

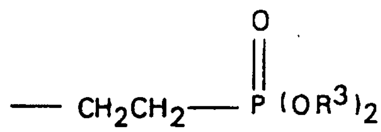

can be made by addition of the appropriate phosphonates to a dialkyl vinylphosphonate in the presence of basic catalysts such as sodium methylate or sodium hydride.

Alkyl- or dialkylaminoalkylphosphonic acid dialkyl esters of the formula

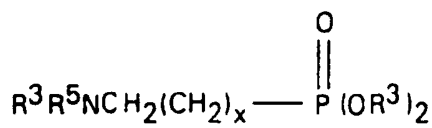

wherein $R^3$ is as defined above and $R^5$ is $R^3$ or hydrogen and x is 0 or 1 can be prepared according to two different methods. Compounds wherein x is 0 are made according to the following equation

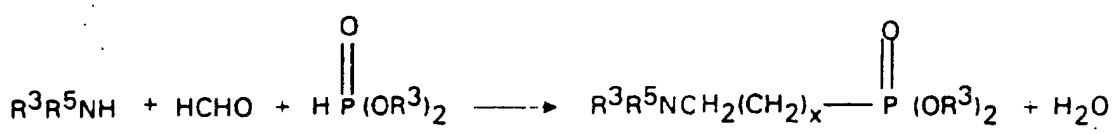

Compounds wherein x is 1 and made according to the following equation:

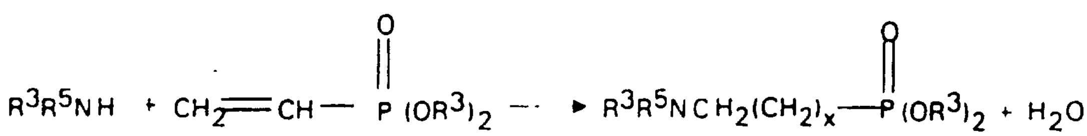

($R^5$ being preferably hydrogen)

The addition of the amine is made in the presence of basic catalysts such as sodium methylate or sodium hydride according to the process described by A. N. Pudovik et al., Doklady Akad. S.S.S.R. 80365(1951); (A 50, 4143 (1956).

The fungicide, whose activity can be enhanced according to the second aspect of invention, is generally a compound selected from:

(i) a conazole steroid demethylation inhibitor,
(ii) a steroid reduction inhibitor based on a 1-[3-(4-tert-butylphenyl)-2-methylpropyl] group which is attached via the N-atom to piperidine or 2,6-dimethylmorpholine
(iii) a dithiocarbamate fungicide
(iv) a phthalimide fungicide in which a chloroalkylthio group is attached via the N-atom to the optionally hydrogenated phthalimide group.
(v) an anilide fungicide
(vi) an mbc fungicide.
(vii) a carbamate fungicide
(viii) a copper compound fungicide
(ix) a tin compound fungicide
(x) a strobilurin type fungicide,
(xi) a 2-anilinopyrimidine fungicide
(xii) a compound which causes systemic activated resistance, or
(xiii) a fungicide selected from the group consisting of chlorothalonil, dimethomorph, fenpiclonil, fluazinam, hymexazol, nuarimol, pencycuron, pyrifenox, thicyofen, probenazole, pyroquilon, tricyclazole, quaternary ammonium compounds, fludioxonil, 5-chloro-2-methyl-4-isothiazolin-3-one, 2-methyl-4-isothiazolin-3-one (and mixtures of these two), furmecyclox, 3-iodo-2-propynyl butylcarbamate, quinoxyfen and sulfur.

Conazoles are defined in ISO standard 257 as compounds based on imidazole or 1,2,4-triazole and containing a halogenated phenyl group. Examples include prochloraz (and its metal complexes - especially the zinc, manganese or copper complex), propiconazole, flusilazole, hexaconazole, tebuconazole, difenoconazole bromuconazole, cyproconazole, diniconazole, fenbuconazole, imibenconazole furconazole, tetraconazole, myclobutanil, penconazole, fluquinconazole, azaconazole, imazalil, triflumizole, epoxiconazole, triticonazole, metconazole and the fungicide having the code No SSF 109.
Examples of type (ii) fungicides include fenpropimorph and fenpropidin.
Examples of type (iii) fungicides include mancozeb and thiram.
Examples of type (iv) fungicides include folpet, captafol and captan.
Examples of type (v) fungicides include

a) 3',5'-dichloroanilide fungicides in which the anilino nitrogen comprises a ring carrying two oxo substituents, in positions adjacent the nitrogen, e.g. iprodione, vinclozolin or procymidone, or
b) acetanilide fungicides, e.g. metalaxyl or ofurace,
c) sulfanilide fungicides, e.g. dichlofluanid,
d) benzanilide fungicides, e.g. flutolanil, and
e) heteroarylanilide fungicides, e.g. thifluzamide.

Examples of type (vi) fungicides include carbendazim, benomyl and thiophanatemethyl.
Examples of type (vii) fungicides include diethofencarb and propamocarb.
Examples of type (viii) fungicides include Bordeaux mixture, oxine-copper, copper oxychloride and copper naphthenate.
Examples of type (ix) fungicides include tributyltin oxide and tributyltin naphthenate.
Strobilurin type fungicides (type (x) fungicides) are methyl esters or N-methylamides of arylacetic acid in which the acetic acid also carries a methoxymethylene or methoxyimino substituent. The aryl group is usually a 2-substituted phenyl group and/or can be separated from the acetic acid by a linking group such as oxygen. Examples of such compounds are those disclosed in a wide number of patent applications, including EPs 178808, 178826, 203606, 203608, 206523, 212859, 226917, 229974, 242070, 242081, 243012, 243014, 243014, 244077, 251082, 253213, 254426, 256667, 260794, 260832, 267734, 270252, 273572, 274825, 278595, 280185, 280383, 291196, 307101, 307103, 310954, 312221, 312243, 329011, 331061, 331061, 331966, 335519, 337211, 341845, 342459, 348766, 350691, 354571, 363818, 370629, 373775, 374811, 378755, 379098, 382375, 383117, 384211, 385224, 385357, 386561, 386681, 387499, 389901, 393428, 393861, 398692, 400417, 402246, 405782, 407873, 407891, 414153, 420091, 422597, 426460, 429968, 430471, 432503, 433233, 433899, 438726, 439785, 459285, 460575, 463488, 463513, 464381, 468684, 468695, 468775, 471261, 471261, 472224, 472300, 473980, 474042, 475158, 477631, 480795, 483851, 483985, 487409, 489660, 498188, 498396, 499823, 503436, 508901, 509857, 513580, 525516, 528245, 528681, 531821, 532022, 532126, 532127, 534216, 535980, 538097, 544587, 546387, 547825, 548650, 554767, 554957, 564928, 564984, 567828, 571326, 579071, 579124, 579908, 581095, 582902, 582925, 583806, 585751, 590610, 596254, 596692, 600835, 602514, 606924, 611760, 617011, 617014, 619301, 622355, 623604, 624570, 625520, 627411, 628540, 634405, 644183, 647631, 656351, 656352, 658542, 658542, 658543, 658547, 662477, 667343, 669315, 672923, 691332, 704430, 711759, 731095 and 738716 and WOs 90/07493, 90/10006, 92/18487, 92/18494, 93/08183, 93/07116, 93/08180, 93/15046, 93/16986, 93/22521, 94/00436, 94/05626, 94/08968, 94/10159, 94/11334, 94/14322, 94/14761, 94/17060, 94/19331, 94/22812, 94/22844, 94/26700, 94/26705, 95/01328, 95/01329, 95/01330, 95/01973, 95/04728, 95/05367, 95/05368, 95/06033, 95/14015, 95/14674, 95/17376, 95/20569, 95/21153, 95/21154, 95/21156, 95/21833, 95/24383, 95/24396, 95/25095, 95/25729, 95/29896, 95/30639, 95/31448, 95/33164, 95/34526, 96/01256, 96/01258, 96/04239, 96/06072, 96/07633, 96/07636, 96/10556, 96/11183, 96/14305, 96/16026, 96/16029, 96/16030, 96/16044, 96/16047, 96/17851, 96/20164, 96/20570, 96/22983, 96/25398, 96/25406, 96/31463, 96/35669, 96/35690, 96/37477, 96/37480, 96/38408, 96/38411, 96/38425, 97/00011, 97/00012, 97/00611, 97/00612, 97/00856, 97/00859, 97/00866, 97/01530, 97/01537, 97/01544, 97/01545, 97/03563, 97/03948, 97/03950, 97/05103, 97/05120, 97/06133, 97/06677, 97/06678, 97/06679, 97/06680, 97/06681, 97/06682, 97/06683, 97/06684, 97/07096, 97/07099, 97/07103 and 97/11606.
Specific compounds are those having the having the common name kresoxim-methyl and azoxystrobin.
Examples of type (xi) fungicides include pyrimethanil, mepanipyrim and cyprodinil.
An example of a type (xiii) fungicide is that having the code number CGA 2425704, which is sold under the trade name "Bion" and is S-methyl benzo-1,2,3-thiadiazole-7-carbothioate.
The names quoted for these compounds are the non-proprietary common names and the chemical structure can be found for example by reference to the "Pesticide Manual", tenth edition, 1994, published by the British Crop Protection Council. Of the compounds whose common names are not mentioned in the Pesticide Manual the full chemical names are as follows:

| | |
|---|---|
| epoxiconazole | 1-[3-(2-chlorophenyl)-2-(4-fluorophenyl)oxiran-2-ylmethyl]-1*H*-1,2,4-triazole |
| kresoxim-methyl | methyl (E)-methoximino[α-(*o*-tolyoxy)-*o*-toly]acetate |
| azoxystrobin | methyl (E)-2-{2-[6-(2-cyanophenoxy)pyrimidin-4-yloxy]phenyl}-3-methoxyacrylate |
| quinoxyfen | 5,7-dichloro-4-quinolyl 4-fluorophenyl ether |

The second aspect of the invention is particularly useful for fungicides of high melting point and/or low solubility in organic solvents. It is particularly applicable to fluquinconazole and azoxystrobin, and especially fluquinconazole.

The weight ratio of component a) to b) is generally between 10:1 and 1:10, preferably between 3:1 and 1:5.

In the first aspect, the compound of formula I can be added to conventional formulations of component a). It may be desirable to also add small quantities of solvent and/or surfactant especially a non-ionic surfactant, and other additives such as fatty acids to improve the emulsifiability of the compound of formula I.

The following Examples illustrate the invention.

Example 1

Into a reaction vessel, which was heated to 100°C, with a reflux condenser (-15°C). were simultaneously added aqueous formaldehyde (12.17 g of 37% solution) and a mixture of di(2-ethylhexyl)amine (36 22 g) and di(2-ethylhexyl) phosphonate (45.96 g). The mixture was heated for 1 hour with stirring and then cooled to 20°C. The water was removed by distillation under reduced pressure to give di(2-ethylhexyl) {[di(2-ethylhexyl)amino]methyl}phosphonate, as a colourless liquid ($n_D^{20}$ = 1.4563).

Example 2

A mixture of 2-ethylhexyl vinylphosphonate, 2-ethylhexylamine (66.50 g) and sodium hydride (0.10 g) was stirred at 130°C for 6 hours. After addition of an additional amount of sodium hydride (0.10 g) and stirring for 9 hours there was obtained di(2-ethylhexyl) {[(2-ethylhexyl)amino]methyl}phosphonate, as a colourless liquid ($n_D^{20}$ = 1.4537).

Example 3

To a mixture of 2-ethylhexyl vinylphosphonate (49.9 g), di(2-ethylhexyl) phosphonate (45.9 g) and THF (80 ml) was added at 20°C with stirring, a solution of sodium methylate in methanol until the mixture reached pH 8-9. The mixture was stirred for 12 hours and water (100 ml) and ethyl acetate (200 ml) added. The organic phase was separated, dried with sodium sulfate, filtered and the solvent evaporated under reduced pressure to give tetra(2-ethylhexyl) ethane-1,2-diphosphonate as a colourless liquid, $n_D^{20}$= 1.4488.

Example 4

A mixture of 2-ethylhexyl vinylphosphonate (49.90 g), octadecylamine (40.43 g) and sodium hydride 0.10 g was stirred at 140°C for 6 hours. Water (100 ml) and ethyl acetate (200 ml) were added. The organic phase was separated, dried with sodium sulfate, filtered and the solvent evaporated under reduced pressure to give di(2-ethylhexyl) [2-(octadecylamino)ethyl]-phosphonate, as a colourless liquid, $n_D^{40}$= 1,4541.

Example 5

A mixture of tetradec-1-ene (30.05 g) and benzoyl peroxide (0.3 g) was added dropwise with stirring to 2-ethylhexyl phenylphosphonate (38.95 g) at 160°C. The resulting mixture was stirred for 6 hours to give 2-ethylhexyl phenyl tetradecylphosphinate, as a colourless liquid, $n_D^{20}$ = 1.4813.

Example 6

In a similar manner to example 5, starting from octadec-1-ene, there was obtained 2-ethylhexyl phenyl octadecylphosphinate, as a colourless liquid, $n_D^{20}$ = 1.4729.

Example 7

Wheat plants were inoculated with *Erysiphe graminis* (powdery mildew). One day after inoculation, they were sprayed with fluquinconazole, obtained by diluting with water to the desired concentration, a suspension concentrate comprising 50% by weight active ingredient, at a rate of 50 g fluquinconazole/ha either alone or mixed with various

inactive phosphonate or phosphinate esters added at a concentration of 0.1% v/v, together with an appropriate emulsifier.

One week after spraying, the wheat was assessed for control of disease. The results are as follows.

| Phosphonate/phosphinate added | % control |
|---|---|
| dihexyl octylphosphonate | 97.2 |
| dioctyl octylphosphonate | 100 |
| di(2-ethylhexyl) hexylphosphonate | 100 |
| di(2-ethylhexyl) octylphosphonate | 100 |
| di(2-ethylhexyl) decylphosphonate | 100 |
| di(2-ethylhexyl) dodecylphosphonate | 100 |
| di(2-ethylhexyl) tetradecylphosphonate | 100 |
| 2-ethylhexyl phenyl tetradecylphosphinate (Example 5) | 100 |
| tetra(2-ethylhexyl) ethane-1,2-diphosphonate (Example 3) | 100 |
| 2-ethylhexyl phenyl octadecylphosphinate (Example 6) | 100 |
| di(2-ethylhexyl) {[di(2-ethylhexyl)amino]methyl}phosphonate (Example 1) | 85.2 |
| di(2-ethylhexyl) [2-(octadecylamino)ethyl]-phosphonate (Example 4) | 93.5 |
| nil | 0 |

Example 8

In a similar manner, Example 7 was repeated with some of the phosphonates and with replacing fluquinconazole with other fungicides. The results are as follows

| active ingredient | Rate (g/ha) | Phosphonate | Rate (% v/v) | control (%) |
|---|---|---|---|---|
| carbendazim | 100 | - | - | 0 |
| carbendazim | 200 | - | - | 0 |
| carbendazim | 400 | - | - | 0 |
| carbendazim | 100 | di(2-ethylhexyl) octylphosphonate | 0.2 | 32 |
| carbendazim | 200 | di(2-ethylhexyl) octylphosphonate | 0.2 | 46 |
| carbendazim | 400 | di(2-ethylhexyl) octylphosphonate | 0.2 | 62 |
| azoxystrobin | 62.5 | - | - | 29 |
| azoxystrobin | 125 | - | - | 30 |
| azoxystrobin | 250 | - | - | 94 |
| azoxystrobin | 62.5 | di(2-ethylhexyl) octylphosphonate | 0.2 | 98 |
| azoxystrobin | 125 | di(2-ethylhexyl) octylphosphonate | 0.2 | 100 |
| azoxystrobin | 250 | di(2-ethylhexyl) octylphosphonate | 0.2 | 100 |
| azoxystrobin | 62.5 | compound of Example 4 | 0.2 | 100 |
| azoxystrobin | 125 | compound of Example 4 | 0.2 | 100 |
| azoxystrobin | 250 | compound of Example 4 | 0.2 | 100 |
| fenpropidin | 40 | - | - | 30 |

(continued)

| active ingredient | Rate (g/ha) | Phosphonate | Rate (% v/v) | control (%) |
|---|---|---|---|---|
| fenpropidin | 80 | - | - | 63 |
| fenpropidin | 40 | di(2-ethylhexyl) octylphosphonate | 0.1 | 70 |
| fenpropidin | 80 | di(2-ethylhexyl) octylphosphonate | 0.1 | 86 |

Example 9

Example 7 was repeated in tests against *Puccinia recondita* using azoxystrobin

Results are as follows:

| active ingredient | Rate (g/ha) | Phosphonate | Rate (% v/v) | control (%) |
|---|---|---|---|---|
| azoxystrobin | 1 | - | - | 8 |
| azoxystrobin | 5 | - | - | 9 |
| azoxystrobin | 20 | - | - | 23 |
| azoxystrobin | 1 | di(2-ethylhexyl) octylphosphonate | 0.2 | 29 |
| azoxystrobin | 5 | di(2-ethylhexyl) octylphosphonate | 0.2 | 85 |
| azoxystrobin | 20 | di(2-ethylhexyl) octylphosphonate | 0.2 | 91 |
| azoxystrobin | 1 | compound of Example 4 | 0.2 | 79 |
| azoxystrobin | 5 | compound of Example 4 | 0.2 | 90 |
| azoxystrobin | 20 | compound of Example 4 | 0.2 | 93 |

Example 10

The following are typical formulations incorporating fluquinconazole and the preferred phosphonate according to the invention.

a) an SC formulation was made from the following components

| Ingredient | g/l |
|---|---|
| fluquinconazole | 100 |
| di(2-ethylhexyl) octylphosphonate | 320 |
| emulsifiers | 190 |
| buffer | 10 |
| structuring agent | 30 |
| vegetable oil to volume | 327 |

b) a suspoemulsion was made to the following composition.

| Ingredient | g/l |
|---|---|
| fluquinconazole | 54 |
| prochloraz | 174 |
| dispersant | 25 |
| emulsifiers | 180 |
| buffer | 10 |

(continued)

| Ingredient | g/l |
|---|---|
| crystal growth inhibitor | 38 |
| di(2-ethylhexyl) octylphosphonate | 174 |
| aromatic hydrocarbon solvent | 192 |
| propylene glycol | 40 |
| antifoam | 2 |
| biocide | 2 |
| structuring agent | 7.5 |
| water to volume | 176 |

**Claims**

**1.** A fungicidal composition which comprises a mixture of

(a) fluquinconazole or azoxystrobin, and
(b) at least one phosphonate or phosphinate of formula I

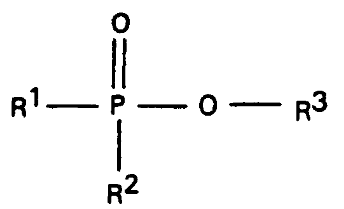

(I)

where

$R^1$ is $C_{6-20}$-alkyl, $C_{6-20}$-alkoxy or optionally substituted phenyl
$R^2$ is benzyl, $C_{6-20}$-alkyl, optionally interrupted by NH or O, di-$C_{6-20}$-alkylamino or the group

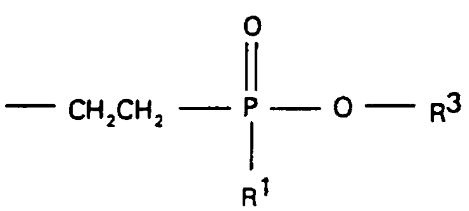

;

and
$R^3$ is $C_{6-20}$-alkyl.

**2.** The use for enhancing the activity of a fungicide used to combat phytopathogenic fungi, of compounds of formula I as defined in claim 1.

**Patentansprüche**

**1.** Fungizide Zusammensetzung, die ein Gemisch aus

(a) Fluchinconazol oder Azoxystrobin und

(b) mindestens einem Phosphonat oder Phosphinat der Formel I enthält:

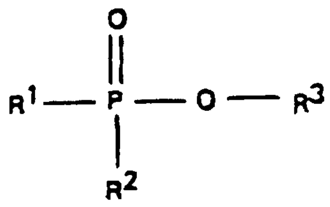 (I),

in der

$R^1$ $C_{6-20}$-Alkyl, $C_{6-20}$-Alkoxy oder gegebenenfalls substituiertes Phenyl bedeutet,
$R^2$ Benzyl, $C_{6-20}$-Alkyl, gegebenenfalls durch NH oder 0 unterbrochen, di-$C_{6-20}$-Alkylamino oder die Gruppe

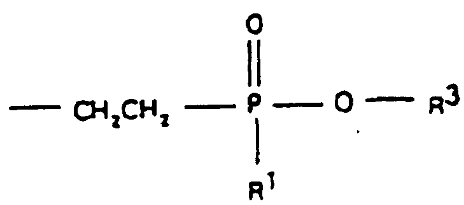

bedeutet, und
$R^3$ $C_{6-20}$-Alkyl bedeutet.

**2.** Verwendung von Verbindungen der in Anspruch 1 definierten Formel I zur Verstärkung der Wirksamkeit eines zur Bekämpfung von phythopathogenen Pilzen verwendeten Fungizids.

**Revendications**

**1.** Composition fongicide comprenant un mélange de

(a) fluquinconazole ou azoxystrobine, et
(b) au moins un phosphonate ou phosphinate de formule I

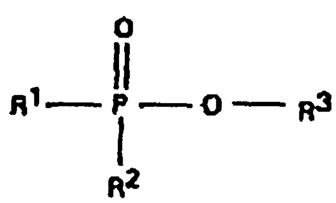 (I)

dans laquelle

$R^1$ est un alkyle en $C_{6-20}$, un alcoxy en $C_{6-20}$ ou un phényle éventuellement substitué,
$R^2$ est un benzyle, un alkyle en $C_{6-20}$, éventuellement interrompu par NH ou O, un di-$C_{6-20}$-alkylamino ou le groupe

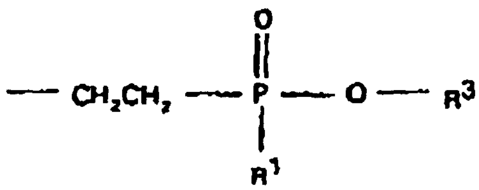

; et
$R^3$ est un alkyle en $C_{6-20}$.

**2.** Utilisation de composés de formule I telle que définie dans la revendication 1, pour accroître l'activité d'un fongicide utilisé pour lutter contre des champignons phytopathogènes.